# EUROPEAN PATENT APPLICATION

(11) **EP 1 770 633 A1**
(43) Date of publication of application: **04.04.2007**
(21) Application number: 06254825.0
(22) Date of filing: 15.09.2006
(51) Int. Cl.: G06Q 40/00

(54) **System and method for cash management in a commerical and retail environment**

(30) Priority: 16.09.2005 US 228746
(71) Applicant: Currency Technics & Metrics, Irving, TX 75038 (US)
(72) Inventor: Myatt, Barbara, Irving Texas 75063 (US); Dickerson, Robert, Irving Texas 75038 (US)
(74) Representative: Howson, Richard G.B.

(57) **Abstract**

A method and system for tracking deposit information and reporting the deposit information to a bank is disclosed. The method includes preparing a deposit record at a retailer or commercial service location and electronically communicating the deposit record to the bank. The deposit record is authenticated with the bank to produce an authentication code and a tag is provided for a deposit associated with the deposit record. The tag includes the authentication code.

## Description

### BACKGROUND

The preparation of deposits and the records associated therewith has traditionally been a labor intensive endeavor. A banking customer may count and prepare deposits by hand. Upon the physical delivery of a deposit to a bank or other financial institution (generically referred to as a "bank"), deposit information may be manually keyed into the banking system by a teller or clerk at a processing location. The labor involved is not only a possible source of errors but also represents a significant expense to the financial institution servicing the accounts. Furthermore, the entry of the deposit information may be time sensitive, as deposits may be required to clear and be available to customers within a predefined time frame.

Another function of banking centers is to provide cash management for customers. Large amounts of cash are handled by most commercial providers, such as retailers, charitable organizations, and service providers, and this cash may form a significant portion of many deposits. Unlike credit based or electronic based commerce, a cash business relies on the physical transportation of the cash deposit to the banking center location for the business and its accounts to operate effectively. Furthermore, in dealing in cash, commercial providers are required to be able to make correct change even to customers paying with large bills. At certain times of day, this can prove problematic. In the morning for example, a business may have deposited most of its cash receipts the previous day. Several customers paying with large bills but making relatively small purchases may quickly deplete the small cash reserves that are typically present in the registers or tills early in the day. For this and other reasons, businesses may present change orders to banks. The credit for change orders may be taken from a deposit or debited from an existing account of the commercial provider. In some cases a commercial provider location may present a change order for bills of a small denomination when a substantial number of bills of the same denomination were only recently deposited by the same commercial provider. Presently, there is no effective way for a financial institution to track cash transactions at a denomination level while providing the level of customer service, response time, and expenses that retailer-customers have come to expect.

Denomination level tracking may also be important to financial institutions, and more particularly their customers, due to money laundering schemes. It is possible for large bills to be exchanged from a prepared deposit for smaller bills. Without denominational level accounting, there is no way to detect that such a transaction has occurred. Additionally, banking institutions may order new bills from one or more federal reserve banks. In some instances, it may be inefficient to order large quantities of a particular denomination of bills or coins, only to have the needed currency deposit by customers soon after the bank places the order.

What is needed is a system and method to address the above and similar concerns.

### SUMMARY

In one embodiment, the present disclosure introduces a method for tracking deposit information and reporting the deposit information to a bank comprising preparing a deposit record at a commercial provider, electronically communicating the deposit record to the bank, authenticating the deposit record with the bank to produce an authentication code, and providing a tag for a deposit associated with the deposit record, with the tag including the authentication code.

In another embodiment, the present disclosure introduces a method of tracking cash movement comprising preparing a denominational accounting of a sum of cash at a first location, electronically communicating the accounting to a second location, associating a unique identifier with the accounting, transporting the sum of cash with a copy of the unique identifier to a second location, and identifying the sum of cash at the second location using the unique identifier.

In another embodiment, the present disclosure introduces a system for providing deposits from a retailer to a financial institution comprising means for preparing a deposit and a deposit record associated therewith for at least one commercial provider location, means for electronically transmitting the deposit record to a financial institution, means for generating a deposit control number corresponding to the deposit, means for affixing the deposit control number to the deposit, means for identifying the deposit based on the deposit control number, and means for crediting an account at the financial institution corresponding to the commercial provider location.

In another embodiment, the present disclosure introduces a computer readable media having executable instructions for execution on a computer. The executable instructions include instructions for processing a deposit and preparing a deposit record, instructions for electronically transmitting the deposit record to a banking institution, instructions for receiving a transaction identifier from the banking institution, and instructions for generating an tracking label containing the transaction identifier for attachment to the deposit.

In another embodiment, the present disclosure introduces computer readable media having executable instructions for execution on a computer. The executable instructions include instructions for receiving an electronic transmission of a deposit record, instructions for producing a transaction identifier corresponding to the deposit record, instructions for electronically transmitting the transaction identifier to a commercial provider location, and instructions for crediting an account associated with the deposit record upon occurrence of a confirmation event.

The foregoing has outlined features of several embodiments so that those skilled in the art may better understand the detailed description that follows. Additional features will be described below that may further form the subject of the claims herein. Those skilled in the art should appreciate that they can readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure.

### BRIEF DESCRIPTION OF THE DRAWINGS

Fig. 1 is a plan view of one embodiment of a deposit management system according to aspects of the present disclosure.

Fig. 2 is a functional diagram of one embodiment of a deposit management system according to aspects of the present disclosure.

Fig. 3 is hierarchical diagram of a deposit management system according to aspects of the present disclosure.

Fig. 4 is a flow chart depicting one embodiment of a method for processing deposit according to aspects of the present disclosure.

### DETAILED DESCRIPTION

It is to be understood that the following disclosure provides many different embodiments of the present invention. These embodiments serve as merely examples and are not intended to be limiting. In addition, the present disclosure may repeat reference numerals and/or letters in the various embodiments/examples. This repetition is for the purpose of simplicity and clarity and does not in itself dictate a relationship between the various embodiments and/or configurations discussed.

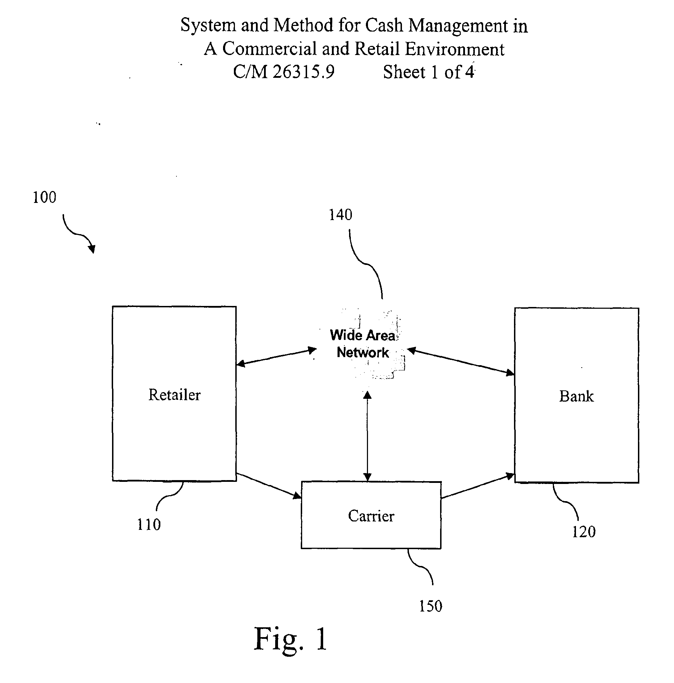

Referring to Fig. 1, a plan view of a deposit management system 100 according to aspects of the present disclosure is shown. A commercial provider location 110 and a bank 120 may be communicatively coupled via a network 140. A carrier or carrier service 150 may be available between the commercial provider location 110 and bank 120.

The retailer 110 refers generically to a facility which performs cash transactions. Examples of commercial providers include a grocery store, a business, a single department within a larger retail environment, a division of a larger company, or a central office that may service multiple individual retail locations. The bank 120 refers generically to a currency processing center. Examples of a bank include a reserve, a savings and loan, a credit union, a managing office of one or more stores or divisions, or another financial entity. The bank 120 may also be a service center operating on behalf of one or more financial institutions, such as a deposit processing center. The network 140 may be a wide area network (WAN) such as the Internet, or may be a wireless network or a traditional land based telephone connection. The network 140 may also be a secure connection such as a virtual private network (VPN) or other secure network or interface. A connection between the retailer 110 and bank 120 may be a connection that is always available and may be used for multiple tasks. In some embodiments, the connection may be established only when needed.

The carrier 150 represents an entity for transporting currency from the retailer 110 to the bank 120. In the present embodiment, the carrier 150 is an armored car service. In some embodiments, the carrier service 150 may have the ability to establish a communications link with the retailer 110. Such a communications link may be used to report the status of an enroute deposit, as will be described in greater detail below. The carrier service 150 may establish communications directly with the retailer 110 or may connect to the retailer 110 via the network 140, or through another medium.

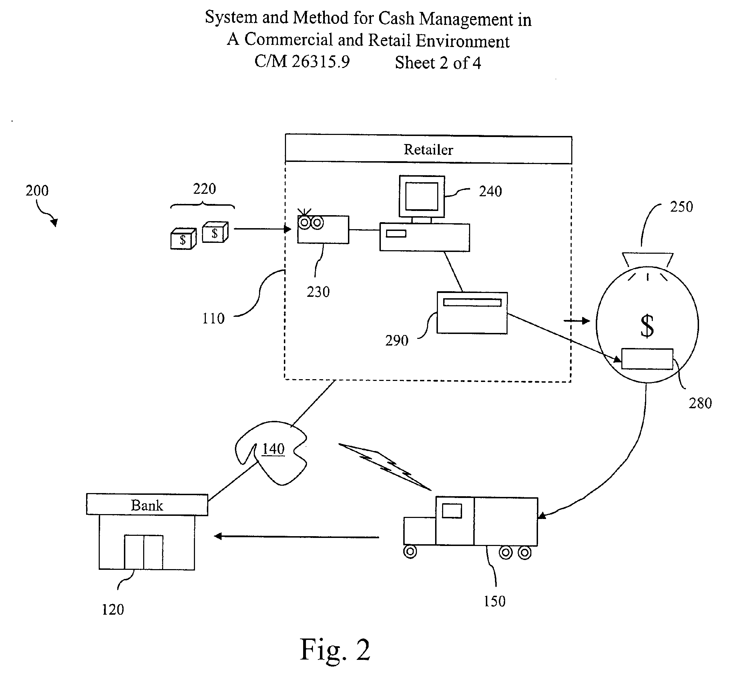

Referring to Fig. 2, for the sake of further example, a deposit management system 200 provides a more detailed view of an embodiment of the system 100 of Fig. 1. Also in the present embodiment, the system 200 is adapted to process U.S. currency, and/or Canadian currency. In further embodiments, the system 200 may be adapted to process currency from many different countries. The present disclosure is also adaptable to process coins as well as paper money.

The retailer 110 may employ the use of automated machinery, such as currency counting device 230 and computer 240 to process the currency 220 and to gather information regarding the currency 220 to aid in preparation of a deposit 250. The currency counting device 230 may be a commercially available device suitable for counting the types and quantities of currency 220 received at the retailer 110. The computer 240 may be assembled from commercially available components or may be a commercially available, ready-made computer adapted to provide the functionality needed as described in this disclosure. In one embodiment, the computer 240 is communicatively coupled to the currency counting device 230 to automatically gather data regarding the currency 220. The data gathered by the computer 240 may include denominational information, such as the exact number of each denomination of bill and/or coin. Additionally, the computer 240 may also be configured to accept data as input from a user in the event that manual counting techniques are utilized, or for other reasons.

From the currency 220 collected and the data gathered by the currency counting device 230 and/or the computer 240, the deposit 250 may be prepared. It is contemplated that various degrees of automation may be employed to generate the physical deposit 250. For example, the currency 220 may be counted by the currency counting device 230 but then manually packaged or bundled to create the deposit 250. Additionally, as is typical with commercial and other deposits, the deposit 250 may contain personal checks, bank drafts, electronic records of credit transaction, and/or other payment instruments.

From the data gathered in preparation of the deposit 250, a deposit summary may be prepared at the retailer 110. As described above, this data may include denominational level details corresponding to the deposit 250. The deposit summary may be transmitted electronically via the network 140 to the bank 120, or by various other means. The bank 120 may have one or more servers or other computers for communicating with the computer 240 of the retailer 110. A relational database may be employed by the bank 120 as one way to allow it to service multiple commercial providers 110 from the same banking location as will be described below.

The bank 120 and retailer 110 may employ various methods of authentication between them to ensure the integrity of their transactions. In one embodiment, file transfer protocol (FTP) that is password protected may be used. In other embodiments, a virtual private network (VPN) can be utilized or the deposit summary may be transmitted via a secure world wide web page using secure sockets layer (SSL) or another suitable security implementation. In yet another embodiment, the computer 240 may be equipped with terminal emulation software to enable an operator at the retailer 110 to interact directly with one or more computers at the bank 120. The file type for the transfer may also vary depending upon the needs of the retailer 110 and bank 120. For example, the deposit summary may be transmitted as a plain text file, as a portable document format (PDF) file, as a spreadsheet file, or in another file format. Within the transferred file itself, the bank 120 and/or the retailer 110 may be identified only by pre-assigned identification numbers or other secure means.

A unique transaction identifier may be generated in order to identify the deposit 250 as it is further processed. The unique transaction identifier may be generated by the bank 120 and securely transmitted or communicated to the retailer 110. The transaction identifier may be an alpha-numeric string, a binary string, or other form of identification. A tag 280 containing the transaction identifier may be generated at the retailer 110. In some embodiments, the tag is a physical/optical device, including for example a printed alphanumeric code created using a printer 290 and affixed to the physical deposit 250. The printer 290 may be any printer or output device suitable for producing the tag 280. In other embodiments, the tag 280 comprises a standard bar code or a two-dimensional barcode. In still another embodiment, the tag 280 may be a magnetic strip or radiofrequency identification (RFID) tag that may be attached to, or otherwise included with, the deposit 250.

The deposit 250 with the tag 280 may then be physically transferred from the retailer 110 to the bank 120 via the carrier 150. The carrier 150 may be an armored carrier service but other methods of transportation may also be employed. For example, the deposit 250 may be transferred by a manager or trusted employee of the retailer 110 and taken directly to the bank 120. The deposit 250 may be given to a banking associate, placed in a night depository, or otherwise placed in the possession of the bank 120.

The bank 120 may be able to quickly process the deposit 250 upon its arrival at the bank 120. A bank employee may be able to scan the tag 280 with a bar code scanner or other electronic scanner, for example, and determine the unique transaction identifier for the deposit 250. From the unique transaction identifier the bank 120 may be able to determine all needed information for the deposit 250 based upon the information previously communicated regarding the deposit from the retailer 110.

At some point in time, the bank 120 may credit the deposit to the account belonging to the retailer 110. In some embodiments, the bank 120 can credit the deposit immediately upon receiving the data from the retailer 110 via the network 140. This would be much sooner than when the deposit 250 arrives at the bank. In another embodiment, the bank 120 may perform a "trigger-on-receipt" of the deposit 250. The bank 120 may also have the option of further automating the process by utilizing an automatic (e.g., radiofrequency identification) receiver to detect when the deposit 250 has been delivered and then issue the corresponding credit.

The bank 120 may also perform an additional accounting of the deposit, either before or after issuing credit for the deposit, to ensure that the count occurring at the retailer 110 was wholly accurate. The bank 120 may determine denominational information in its accounting to determine if the information matches the denominational information gathered by the retailer 110. In this way, it may be determined whether any bills of one denomination have been exchanged for those of another denomination after preparation of the deposit by the retailer 110. Thus, certain types of money laundering and fraud may be detected.

In addition to utilizing the tag 280 on the deposit 250 to streamline processing of the deposit 250 at the bank 120, the tag 280 may also be used to track the deposit 250 as it is enroute to the bank 120. In one embodiment, the carrier 150 has the ability to scan or otherwise read the tag 280 when the deposit 250 is loaded. The fact that the deposit 250 has been loaded may be communicated to the bank 120. The carrier 150 may be communicatively coupled to the bank 120. The communications link may be wireless, for example, and may employ the network 140 and/or another medium for at least part of the communications path. In one embodiment, the bank may credit an account associated with the retailer 110 whenever the carrier 150 has received the deposit 250. As stated previously, the tag 280 may operate as a wireless transmitter. Thus, equipping the carrier 150 with a wireless receiver may allow the deposit 250 to be known to have been picked up by the carrier 150 without the need for manually scanning the tag 280. The bank 120 may also use information gathered by the carrier 150 to determine the performance of the carrier 150 relative to any performance obligations owing the bank 120 by the carrier 150. For example, the bank 120 may be able to track the percentage of on-time pick ups made by a particular carrier.

The bank 120 may also represent a location from which the retailer 110 and a number of other retailer request change orders. Retailers may request specified quantities of particular denominations of currency. By aggregating data received from retailers, the bank 120 may be able to more accurately satisfy upcoming demand for a given denomination and thereby reduce the number of transactions between the bank 120 and a government clearinghouse (e.g., the federal reserve) where the bank 120 seeks to have its own currency and denominational needs met. The bank 120 may also be able to more easily comply with any regulations regarding the exchange of currency and denominations with the clearinghouse.

From the data gathered at the various stages of the deposit transactions as described herein, reports may be assembled by the bank 120 as needed. As stated, the bank 120 may utilize a relational database to organize the information gathered. Any database utilized by the bank 120 may be configured to prevent unwanted sharing of information between various retailers. Depending upon the information gathered with each deposit transaction, the bank 120 may be able to generate reports based upon geographical or other constraints as desired by the bank 120 or banking customer, such as the retailer 110. The bank 120 may also be able to spot trends in deposit transactions to aid in determining how to effectively serve retailers 110.

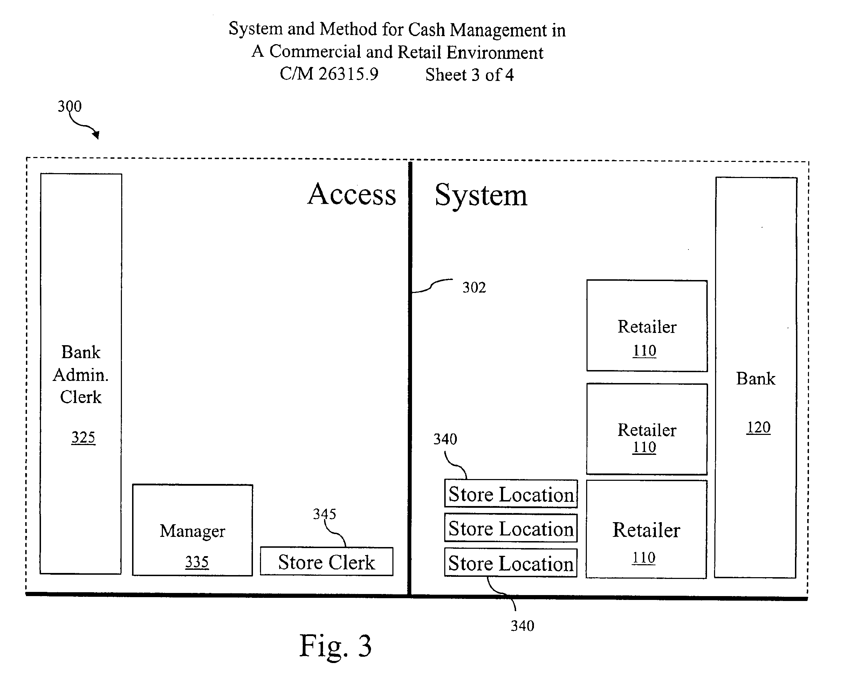

Referring to Fig. 3, a hierarchical diagram of a deposit management system 300 according to aspects of the present disclosure is shown. For the sake of discussion, a line 302 separates different agents or employees (people) from different locations. The bank 120 includes a bank employee or bank administrative clerk 325. The clerk 325 may have access to the bank's capabilities and functions as described in the present disclosure. A single clerk 325 is shown here to illustrate the relationship between the various entities of the system 300 and their various agents or employees. It is understood that a bank may have multiple clerks and other employees servicing its accounts. In furtherance of the present example, the bank 120 services multiple retailers 110, and each retailer includes one or more locations 340. One or more commercial provider managers 335 and commercial provider clerks 345 are also described. The bank clerk 325 will thus have access to the banking functions needed to service the retailers 110.

In the present example, the retailer(s) 110 may choose to combine receipts from all store locations 340 before communicating deposit information to the bank 120 and delivering the deposit as previously described. In other embodiments, each of the store locations 340 may be able to communicate deposit information and transfer deposits to the bank 340. In such a case, the retailers 110 may have access at the bank 120 to reporting information gathered by the bank 120 and corresponding to an individual retailer's 110 own store location(s) 340. It may also be seen that a commercial provider clerk 345 may have access to a single store location's 340 required functionality of the system 300. The commercial provider manager335 may retain access to functionality of the system 300 on behalf the retailer 110 and the associated store locations 340. As before, the bank administrative clerk 325 retains access to the bank's 120 portion of the system's 300 functionality. In some instances, the store locations 340 may wish to have the functionality and accountability of the systems described in the present disclosure available for each employee or register. Thus, it is understood that the functionality described herein may reside on components other than those shown in the exemplary embodiments and may also be shared between various components.

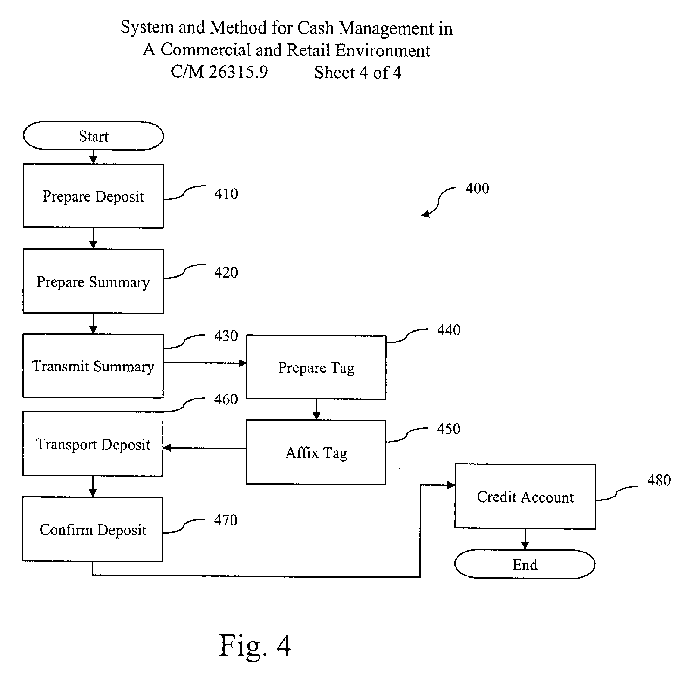

Referring to Fig. 4, a flow chart 400 depicting one embodiment of a method for processing deposits according to aspects of the present disclosure is shown. At step 410 a deposit is prepared from the currency received at a retailer. At step 420 a deposit summary is prepared. The deposit summary may contain information gathered while preparing the deposit at step 410. The deposit summary is then transmitted at step 430. The deposit summary may be electronically transmitted to a bank.

The bank may transmit a unique transaction number corresponding to the deposit. The unique transaction number, or deposit control number, may be used to generate or prepare a tag at step 440. As before, the tag may be a printed paper tag, a radio transmitter tag, or another suitable tracking implement. The tag may be affixed to the deposit to aid in identification and tracking of the deposit at step 450.

The deposit may be handed over to a carrier and physically transported to the bank at step 460. As before, the carrier may utilize the tag to identify the deposit and provide tracking information to the bank as the deposit is enroute to the bank. The deposit may be confirmed when received by the bank at step 420. As before, the bank may scan or otherwise read the tag to identify the deposit. The bank, having already obtained all the needed information corresponding to the deposit at step 430, may credit the account at step 480. In another embodiment, the bank may credit the account when it is received and identified at the carrier at step 460, thus combining steps 460, 470, and 480.

Those skilled in the art should appreciate that they may readily use the present disclosure as a basis for designing or modifying other processes and structures for carrying out the same purposes and/or achieving the same advantages of the embodiments introduced herein. For example, various steps of the described methods and sequences may be executed in a different order or executed sequentially, combined, further divided, replaced with alternate steps, or removed entirely. In addition, various functions illustrated in the methods or described elsewhere in the disclosure may be combined to provide additional and/or alternate functions. Those skilled in the art should also realize that such equivalent constructions do not depart from the spirit and scope of the present disclosure, and that they may make various changes, substitutions, and alterations herein without departing from the spirit and scope of the present disclosure.

## Claims

1. A method for tracking deposit information and reporting the deposit information to a bank comprising:
preparing a deposit record at a commercial provider location;
electronically communicating the deposit record to the bank;
authenticating the deposit record with the bank to produce an authentication code; and
providing a tag to the commercial provider location for a deposit associated with the deposit record, the tag including the authentication code.

2. The method of claim 1 wherein the deposit record includes denomination information associated with a cash portion of the deposit.

3. The method of claim 1 wherein the deposit record is electronically communicated using a file transfer protocol (FTP).

4. The method of claim 1 further comprising:
crediting the commercial provider location with the deposit upon communication of the deposit record to the bank.

5. The method of claim 1 wherein the authentication code is encoded on the tag in a format from a group consisting of two dimensional barcode, one dimensional bar code, magnetic identification, and radio frequency (RF) identification.

6. The method of claim 5 further comprising transporting the deposit with the tag to a second bank.

7. The method of claim 6 further comprising:
receiving the deposit at a carrier;
identifying the deposit by scanning the tag;
electronically communicating the received deposit to the bank; and
crediting a bank account associated with the commercial provider location when the deposit is received at the carrier.

8. The method of claim 6 further comprising:
receiving the deposit at the bank;
identifying the deposit by scanning the tag; and
crediting a bank account associated with the commercial provider location.

9. A method of tracking cash movement comprising:
preparing a denominational accounting of a sum of cash at a first location; electronically communicating the accounting to a second location;
associating a unique identifier with the accounting;
transporting the sum of cash with a copy of the unique identifier to a second location; and
identifying the sum of cash at the second location using the unique identifier.

10. The method of claim 9 further comprising proving the unique identifier as a tag.

11. The method of claim 9 further comprising utilizing a distributed computing environment for the electronic communications.

12. The method of claim 9 further comprising crediting an account associated with the first location for the accounting when the sum of cash is identified at the second location.

13. The method of claim 9 further comprising:
identifying the sum of cash by the unique identifier at a carrier;
communicating the identified sum to the second location; and
crediting an account associated with the first location corresponding to the communication.

14. The method of claim 9 wherein the first location is a commercial provider location.

15. The method of claim 9 wherein the first location is a centralized accounting location and the sum of cash corresponds to funds received at a plurality of commercial provider locations.

16. A system for providing deposits from a commercial provider location to a financial institution comprising:
means for preparing a deposit and a deposit record associated the commercial provider location;
means for electronically transmitting the deposit record to a financial institution;
means for generating a deposit control number corresponding to the deposit;
means for affixing the deposit control number to the deposit at the commercial provider location;
means for identifying the deposit based on the deposit control number; and
means for crediting an account at the financial institution corresponding to the retailer.

17. The system of claim 16 wherein the means for preparing a deposit and deposit record includes automated currency and coin counting machinery.

18. The system of claim 16 wherein the means for electronically transmitting the deposit record includes a general purpose computer with means for interfacing with a computer associated with the financial institution.

19. The system of claim 16 wherein the means for affixing a deposit control number includes utilizing at least one tag attached to a deposit container, the tag being formatted in a type from a group consisting of two dimensional bar code, one dimensional bar code, radio frequency identification, and magnetic identification.

20. The system of claim 20 wherein the means for identifying the deposit includes a tag scanner.

21. The system of claim 16 wherein the means for affixing a deposit control number includes a radiofrequency transmitter attached to a deposit container.

22. The system of claim 22 wherein the means for identifying the deposit includes a radiofrequency receiver.

23. The system of claim 16 wherein the means for crediting includes an automated computerized banking system.

24. A computer readable media having executable instructions for execution on a computer comprising:
instructions for processing a deposit and preparing a deposit record;
instructions for electronically transmitting the deposit record to a banking institution;
instructions for receiving a transaction identifier from the banking institution; and
instructions for generating a tracking label containing the transaction identifier for attachment to the deposit.

25. The computer readable media of claim 24 wherein the instructions for processing a deposit includes instructions for determining a cash portion of the deposit by denomination.

26. The computer readable media of claim 24 wherein the instructions for processing a deposit includes instructions for determining an amount of non-cash receipts included in the deposit.

27. The computer readable media of claim 24 wherein the instructions for preparing a deposit record includes instructions for including a customer reference number in the deposit record.

28. The computer readable media of claim 24 wherein the instructions for preparing a deposit record includes instructions for preparing the deposit record in a computer-data format.

29. A computer readable media having executable instructions for execution on a computer comprising:
instructions for receiving an electronic transmission of a deposit record;
instructions for producing a transaction identifier corresponding to the deposit record;
instructions for electronically transmitting the transaction identifier to a commercial provider location; and
instructions for crediting an account associated with the deposit record upon occurrence of a confirmation event.

30. The computer readable media of claim 29 wherein the instructions for receiving an electronic transmission includes instructions for receiving the transmission utilizing a predetermined file transfer protocol (FTP).

31. The computer readable media of claim 30 wherein the instructions for receiving an electronic transmission further includes instructions for acting as a FTP server.

32. The computer readable media of claim 30 further comprising identifying a sender of the deposit record via a unique electronic reference number associated with the sender.

33. The computer readable media of claim 30 wherein the instructions for crediting include instructions for crediting an account associated with the deposit record upon confirmation of receipt of the deposit at a carrier.

34. The computer readable media of claim 30 wherein the instructions for crediting include instructions for crediting an account associated with the deposit record upon confirmation receipt of the deposit at a banking location.
